# EUROPÄISCHE PATENTSCHRIFT

(11) **EP 0 707 119 B1**
(45) Veröffentlichungstag und Bekanntmachung des Hinweises auf die Patenterteilung: **08.08.2001**
(21) Anmeldenummer: 94116203.4
(22) Anmeldetag: 14.10.1994
(51) Int. Cl.: E04B 1/49, F16B 15/00

(54) **System zur Halterung und Befestigung**
Connecting and fixing system
Système de montage et de fixation

(43) Veröffentlichungstag der Anmeldung: 17.04.1996
(73) Patentinhaber: Wedi, Stephan, 48282 Emsdetten (DE)
(72) Erfinder: Wedi, Stephan, 48282 Emsdetten (DE)
(74) Vertreter: Hoffmeister, Helmut, Dr. Dipl.-Phys.

(56) Entgegenhaltungen:
- EP-A- 0 212 315
- EP-A- 0 596 512
- DE-U- 8 600 938
- GB-A- 1 218 076
- US-A- 2 816 436

## Beschreibung

Die Erfindung betrifft ein System zur Halterung und Befestigung von Bauelementen aus organischen und/oder anorganischen Substanzen, insbesondere Platten aus Kunststoff-Hartschaum, die wenigstens einseitig mit einer Glasfaserarmierung und einer Spezialmörtelbeschichtung versehen sind.

Eine Gruppe von Befestigungselementen ist aus der EP-A-0 212 315 bekannt. Das erste Befestigungselement besteht aus einem Befestigungsschenkel, der mit nagelförmigen Erhebungen versehen ist. Das zweite Befestigungselement besteht aus einem Auflageschenkel, an dem ein Anlageschenkel im rechten Winkel angeordnet ist. Auf dem Anlageschenkel sind nagelförmige Stifte angeordnet und in den Anlageschenkel Ausnehmungen eingebracht, deren Anzahl und deren Anordnung kompatibel zu den nagelförmigen Erhebungen des ersten Befestigungselements sind.

Nachteilig ist, daß beide Befestigungselemente nur dazu dienen, eine Platte zu umranden, wobei das erste Befestigungselement das zweite Befestigungselement noch zusätzlich halten muß. Für einen Zusammenbau von Platten zu unterschiedlichen Konfigurationen sind die Befestigungselemente aber nicht geeignet.

Weiterhin ist ein derartiges System aus der DE-U-8 600 938 bekannt. Aus zwei Platten aus Kunststoffhartschaum, die auf ihren Außenseiten mit einem Armierungsgewebe versehen sind, wird durch ein Verkleben eine Rohrverkleidung hergestellt. Um die Rohrverkleidung an einer Wand befestigen zu können, werden U-förmige Schienenelemente auf die Plattenenden aufgesteckt. An die U-förmigen Schienenelemente ist jeweils eine Lasche mit einer Durchbrechung angeschweißt. Mit Hilfe von Schrauben werden die Laschenelemente an der Wand befestigt. Anschließend wird die Wand und der Rohrkasten verfliest;

Nachteilig ist, daß durch die U-förmigen Schienenelemente die einzelnen Plattenteile eingespannt werden. Auf grund der unterschiedlichen Ausdehnungsverhältnisse zwischen den Platten, den Schienenelementen und dem Mauerwerk treten Spannungen auf, die direkt auf die Platten übertragen werden. Die Folge dessen sind Risse und Ausbrechungen in den Platten. Ein weiterer Nachteil ist, daß die U-förmigen Schienenelemente an beiden Seiten der Platten über die glatte Fläche hinausragen, so daß auf beiden Seiten eine gesonderte Verspachtelung notwendig ist. Ein weiterer Nachteil ist, daß für Rohrkästen, die aus Platten unterschiedlicher Plattendikke hergestellt werden, ein breites Sortiment an Befestigungsteilen gelagert werden muß.

Aus der EP-A-0 596 512 ist ein Schnellbau-Trennwandsystem zum Schaffen flexibler Trennwände für die Gestaltung von Kabinen und Abtrennungen im Sanitärbereich bekannt. Es besteht aus einem Metalltragrahmen, der U-Winkel mit Lochreihen aufweist und Klappen, die entsprechend der Wandhöhe und Wandbreite zusammengesetzt sind, wobei die Platten im Bereich der U-Schenkel parallel zur Kante gefalzt sind und die Falzbreite im wesentlichen der Breite und die Falztiefe im wesentlichen der Dicke der U-Schenkel entspricht. Die als Eck- oder Flächentafeln ausgebildeten Platten werden an den Außenecken und in Eckbereichen von Winkel- und Mittelwandbereich von geraden, mit Lochreihen versehenen U-Profilen und der langen Ober- und Unterseite zwischen den U-Profilen von geraden Schienen mit außen angeordneten Erhebungen gehalten.

Nachteilig ist, d-aß für das Aufstellen des Schnellbau-Trennwandsystems der Metalltragrahmen aus dem U-förmigen Schienenelementen mit den Lochreihen zugeschnitten werden muß. Eckverbindungen müssen dabei separat angefertigt werden. Darüber hinaus sind die- geraden Schienen mit den nach außen angeordneten Erhebungen ebenfalls separat zuzuschneiden. Auch wenn sich diese Lösung bewährt hat, erfordert sie einen hohen Aufwand an Lagerhaltung. Ein weiterer Nachteil ist, daß die einzelnen Platten vorgefalzt werden müssen, damit die U-förmigen Schenkel mit den Lochreihen nicht überstehen. Wird das Schnellbau-Trennwandsystem aufgestellt, muß Kleber in die U-förmigen Schienenelemente eingebracht werden, damit die Platten sicher gehalten werden können.

Ein Fixierungssystem von Platten ist aus- der WO-A-8 902 502 bekannt. Hierbei werden flächenartige bzw. Profilelemente an den Außenseiten mit gekrümmten bzw. verbiegbaren Krampen versehen. Auch wenn sich mit Hilfe dieser Krampen die einzelnen Profile in einer Platte festsetzen können, sind sie- jeweils der Plattendicke der einzelnen Platten anzupassen. Damit ist ein hoher Lageraufwand verbunden. Ein weiterer Nachteil ist, daß die gebogenen Krampen bei einem Einstecken in eine Kunststoffhartschaum-Platte zu deren Beschädigung bzw. Spaltung führen können, so daß sich die Verbindungsplatte sehr leicht lösen kann.

Weiterhin ist aus der DE-C 641 489 ein Flacheisenanker zur Befestigung einer auf der Innenseite mit Isolierpappe bekleideten Rabitzwandschale bekannt. Der Flacheisenanker weist zur Abstützung der Isolierpappe eine durch Ausstanzen und Abbiegen eines Lappens gebildete Anlagefläche auf. Zwischen dieser Anlagenfläche und dem einen Draht den Bewegungsgewebes aufnehmenden Spalt des spitzen Ankerendes besitzt der Flachanker eine von der Breitseite des Flacheisenankers gebildete waagerechte Tragfläche.

Nachteilig ist, daß der Flacheisenanker zur Halterung der Rabitzwandschale in die Wand eingeschlagen werden muß. Durch seine spezielle Ausbildung ist dies nur für gemauerte Wände möglich. Erst danach lassen sich die Rabitzwandteile auf den Flacheisenanker aufdrücken.

Demnach stellt sich die Aufgabe, die eingangs genannte bekannte Gruppe von Befestigungsmitteln zu einem System zur Halterung und Befestigung von Bauelementen aus organischen und/oder anorganischen Substanzen, insbesondere Platten aus Kunststoff-Hartschaum, die wenigstens einseitig mit einer Glasfaserarmierung und einer Spezialmörtelbeschichtung versehen sein können, so weiter zu entwickeln, daß mit den Platten unterschiedlichste Konfigurationen zusammengesteckt werden können.

Diese Aufgabe wird durch die Merkmale des Anspruch 1 gelöst.

Die mit der Erfindung erzielten Vorteile bestehen insbesondere darin, daß durch die Winkelverbindungselemente Platten ohne Schienenhalterungen, ohne Verleimungen usw. zu winkelförmigen, T-förmigen und dergleichen Konfigurationen zusammensteckbar sind. Hierdurch wird die Möglichkeit gegeben, durch speziell zugeschnittene Platten einen Rohrkasten für ein Verkleiden von Rohrelementen zusammenzustecken.

Mit Hilfe von Wi.nkelanschlußelementen lassen sich die aus den Platten hergestellten Konfigurationen, wie z. B. Rohrkästen, Trennwandsysteme, Waschtische, Badewannenverkleidungen und dergleichen an einer Wand bzw. an Rahmenteilen befestigen. Hierzu werden in einzelnen Abständen in die Flachseiten der Platten die Steckschenkel eingeschoben. Um bei freistehenden Konfigurationen einen besseren Halt zu sichern, können die Steckschenkel auf der einen bzw. der anderen Seite befestigt werden. Durch den dritten Befestigungsschenkel ist es möglich, Platten zu einem T-Konfigurat zusammenstecken zu können. Durch den dritten Befestigungsschenkel und den Arretierungsschenkel wird die gleichmäßige Winkelverbindung über eine lange Fläche gesichert. Hierdurch ist es auch handlichwerklichen Laien leicht möglich, eine entsprechende Winkelkonfiguration aus Platten zusammenzustecken.

Der Einsatz des Längenverbindungselementes ist immer dann von Vorteil, wenn auf der Baustelle zwei verschiedene Platten auf Länge zusammenzufügen sind. Hierbei werden mehrere Längenverbindungselemente über die Längsseiten verteilt in die gegenüber liegenden Schmalseiten eingedrückt. Nach dem Eindrücken halten beide Teilplatten fest aneinander zusammen und stehen für eine weitere Verarbeitung zur Verfügung. Dadurch, daß an wenigstens einer der Außenseiten des Verbindungsschenkels ein gespitzter Lanzenschenkel angeordnet ist, wird zum Einen eine sichere Arretierung der Tafeln bzw. bei dickeren Tafeln eine solidere Steckverbindung zwischen ihnen geschaffen.

Der Rohrkasten, das Trennwandsystem, der Waschtisch, die Badewannenverkleidung und dergleichen braucht dabei nicht unbedingt mit Hilfe von Winkelverbindungselementen zusammengesteckt sein. Möglich ist auch, daß die einzelnen Platten durch Verklebungen oder sonstige Hilfselemente zusammengehalten werden können und mit Hilfe der Winkelanschlußelemente an Wänden befestigt werden. Ein sehr wesentlicher Vorteil ist, daß das Befestigen und Zusammenstecken der Platten zu beliebigen Konfigurationen im Prinzip mit nur den Grundelementen ermöglicht wird. Hierdurch eignet sich das erfindungsgemäße System auch insbesondere für das Installieren von Isolierungen von Rohren und dergleichen.

Unter Platten werden dabei Kernelemente verstanden, die aus Schichten von Fasern aus Wolle, Kugeln, Schnitzeln, Streifen, Metallstücken oder dergleichen bestehen. Diese können geleimt oder gepresst sein. Sie können auch beidseits mit Kunststoff-Hartschaum versehen sein. Darüber hinaus können die Platten aus Kunststoff-Hartschaum bestehen. Zur Erhöhung ihrer Festigkeit bzw. Verbesserung ihrer Verarbeitungsfähigkeit können sie auf wenigstens einer ihrer Außenseite mit einer Glasfaserarmierung und einer Spezialmörtelbeschichtung versehen sein.

Die Länge des dritten Befestigungsschenkels des zweiten und des dritten Winkelverbindungselements und der Arretierungsschenkel des dritten Befestigungsschenkels des dritten Winkelverbindungselements kann etwa einer Plattendicke der Platte entsprechen.

Sollen von außen sehr glatte Außenflächen der miteinander zusammengesteckten Platten entstehen, können die Lanzenschenkel über Sollbruchlinien von dem Verbindungsschenkel abgetrennt werden.

Die nagelförmigen Erhebungen, die nagelförmigen Stiftelemente und die nagelförmigen Stifterhebungselemente liegen etwa in der Mitte der Befestigungsschenkelseiten, der Steckschenkelseite und der Verbindungsschenkelseiten. Dabei wird ein sicherer und fester Halt insbesondere in den Schmalseiten der Platte gewährleistet. Eine Beschädigung der jeweiligen Platte wird daürberhinaus vermieden. Vorteilhaft ist es, wenn die nagelförmigen Erhebungen, die nagelförmigen Stiftelemente und die nagelförmigen Stifterhebungselemente mit Erhebungen, im Querschnitt keilförmigen Ringelementen, die in etwa gleichmäßig über dem Schaft verteilt angeordnet sind, oder dergleichen versehen sind. Hierdurch wird erreicht, daß nach einem Einbringen der nagelförmigen Erhebungen Stiftelemente bzw. Stifterhöhungselemente in die Platte bei einem Herausziehen ein Widerstand entgegengesetzt wird.

Die Ringelemente sind dabei so gerichtet, daß sie dem Einstecken keine und dem Herausziehen einen starken Widerstand entgegensetzen.

Vorteilhaft ist es, wenn die Befestigungsschenkel und die Halteplatte Aussparungen aufweisen. Die Aussparungen können dabei rund, W-förmig oder oval ausgebildet sein. Mit Hilfe dieser Aussparungen ist ein weiterer Befestigungs- bzw. Halterungseffekt verbunden.

Vorteilhaft ist es, wenn am Winkelanschlußelement ein Fußelement angeordnet ist. Hierdurch ist es möglich, das Winkelanschlußelement in Platten einzuführen und sie beabstandet gegen einem Untergrund, z.B. einem Fußboden oder dergleichen zu halten. Dabei ist es vorteilhaft, wenn die Fußelemente höhenverstellbar sind, wodurch eine direkte und problemlose Anpassung an Fußbodenunebenheiten gegeben ist.

Vorteilhaft ist es, wenn das erste, zweite und dritte Winkelverbindungselement, das Winkelanschlußelement und das Längsverbindungselement aus Kunststoff, insbesondere Hartkunststoff, aus Metall, z.B. Messing, Eisen, aus Hartpapier, z.B. einem Hartpapier unter dem Warenzeichen "Pertinax", hergestellt sind. Die Materialauswahl wird dabei von den jeweiligen Einsatzbedingungen bestimmt. Sind hohe Belastungen zu tragen, ist es vorteilhaft, wenn Hartkunststoff oder Eisen zum Einsatz kommen.

Die Erfindung wird nachstehend anhand der Zeichnung näher erläutert. Es zeigen:
- Fig. 1: eine erste und eine zweite Ausführungsform eines Winkelverbindungselements eines Systems zur Halterung und Befestigung für ein verdecktes Zusammenstecken von Platten in einer schematischen Draufsicht,
- Fig. 2: eine dritte Ausführungsform eines Winkelverbindungselements eines Systems zur Halterung und Befestigung in einer schematischen, perspektivischen Darstellung,
- Fig. 3: ein Winkelanschlußelement eines Systems zur Halterung und Befestigung in einer perspektivischen Darstellung,
- Fig. 4: ein Winkelanschlußelement gemäß Fig. 7 mit einer verdeckt befestigten Platte in einer schematischen Draufsicht,
- Fig. 5: ein Längenverbindungselement eines Systems zur Halterung und Befestigung, und Platten in einer Zsammensteckausgangsstellung in einer schematischen, perspektivischen Darstellung,
- Fig. 6: ein Längenverbindungselement und Platten gemäß Fig. 5 in zusammengesteckter Stellung in einer schematisch dargestellten Draufsicht,
- Fig. 7: ein Längenverbindungselement mit dickeren Platten in einer Zusammensteckausgangsstellung in einer schematischen, perspektivischen Darstellung und
- Fig. 8: ein Längenverbindungselement und zusammengesteckte dickere Platten gemäß in einer schematisch dargestellten Draufsicht.
- Fig. 9: ein mit einem System zur Halterung und Befestigung zusammengesteckterr und befestigter Rohrkasten in einer schematischen, perspektivischen Darstellung,
- Fig.10a: ein mit einem System zur Halterung und Befestigung zusammengestecktes und befestigtes Trennwandsystem in einer schematischen, perspektivischen Darstellung,
- Fig.10b: ein Trennwandsystem gemäß Fig. 10a in einer schematischen Draufsicht,
- Fig. 11: ein mit einem System zur Halterung und Befestigung zusammengesteckter und befestigter Waschtisch in einer schematischen, perspektivischen Darstellung,
- Fig. 12: ein mit einem System zur Halterung und Befestigung zusammengesteckte und befestigte Badewannenverkleidung in einer schematischen, perspektivischen Darstellung,

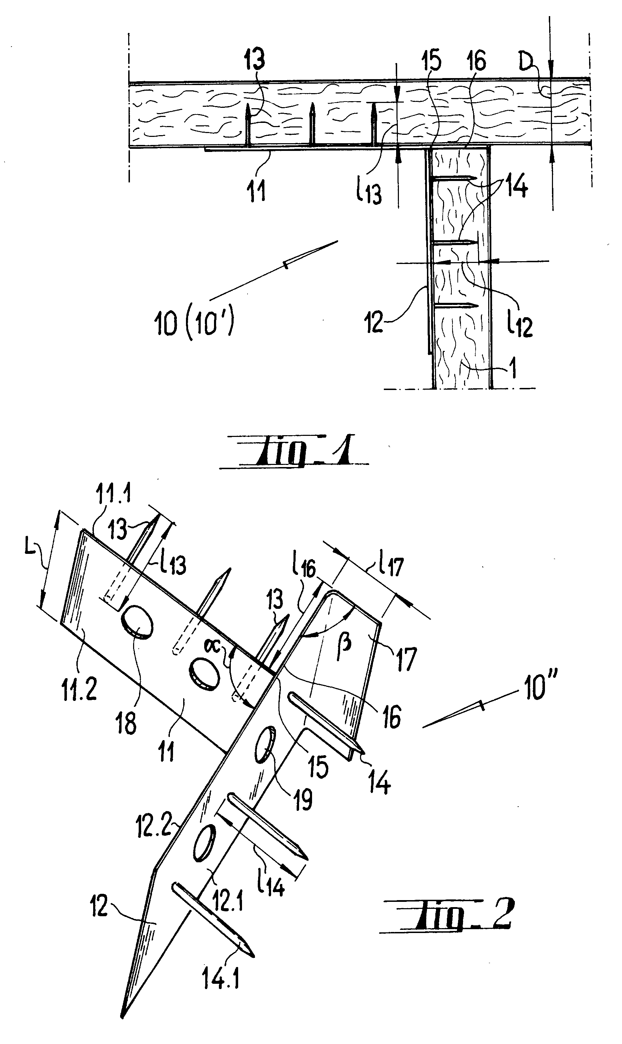

Ein System zur Halterung und Befestigung ist in den Fig. 1 bis 8 dargestellt. Es besteht aus folgenden Teilen:
- einem Winkelverbindungselement 10,
- einem Winkelverbindungselement 10',
- einem Winkelverbindungselement 10",
- einem Winkelanschlußelement 20,
- einem Längenverbindungselement 30,
die einzeln, teilweise und insgesamt zum Zusammenstecken und Befestigen von Platten 1 eingesetzt werden können.

Das in Fig. 1 dargestellte Verbindungselement 10 besteht aus zwei im rechten Winkel zueinander stehenden Befestigungsschenkeln 11 und 12 mit nagelförmigen Erhebungen 13 und 14. Um die Platte 1 im rechten Winkel sicher an der anderen halten zu können, ist es vorteilhaft, wenn die Winkelverbindungselemente 10 von beiden Seiten gesteckt werden. Natürlich können auch Winkelverbindungselemente 10', wie auch in Fig. 1 dargestellt, eingesetzt werden. Hierbei handelt es sich um ein Winkelverbindungselement, das um zwei in dem rechten Winkel angeordnete Befestigungsschenkel 11 und 12 besteht, wobei der Befestigungsschenkel 11 um einen Befestigungsschenkel 16 verlängert ist. Auf den Befestigungsschenkeln 11, 12 bzw. 16 sind auch hier nagelförmige Erhebungen 13 bzw. 14 angebracht.

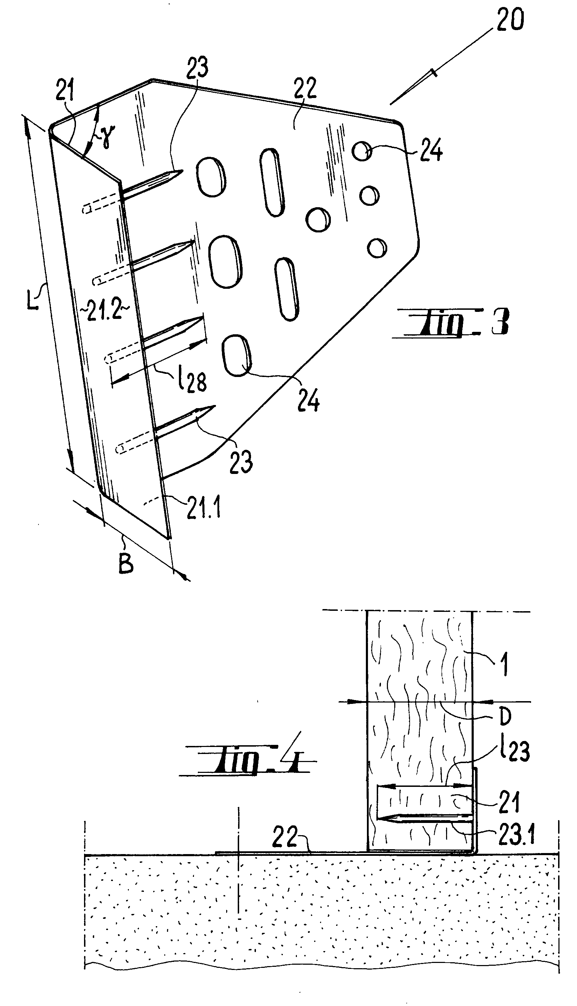

Das Winkelverbindungselement 10" ist im einzelnen in Fig. 2 dargestellt. Es besteht aus dem Befestigungsschenkel 11 und dem Befestigungsschenkel 12, die in einem Winkel α von- etwa 90° miteinander verbunden sind. Der Befestigungsschenkel 12 ist über eine Winkelverbindung 15 um den Befestigungsschenkel 16 verlängert. An dem Befestigungsschenkel 16-ist ein Arretierungsschenkel 17 in- einem Winkel β angelenkt. Wesentlich ist, daß die Länge des Befestigungsschenkels 16 und die Länge des Arretierungsschenkels 17 eine Länge l₁₆ bzw. l₁₇ haben, die in etwa der Plattendicke D (vgl. Fig. 1) der Platte 1 entsprechen. Damit wird gewährleistet, daß die Platten 1 immer gleich beabstandet im rechten Winkel zusammengehalten werden. Ein Überstehen bzw. versetztes Zusammenstekken wird damit verhindert. Die Befestigungsschenkel 11 und 12 haben eine Längslänge L von 5 bis 500 mm, vorzugsweise von 40 mm. Sie weisen Schenkelseiten 11.1, 11.2 bzw. 12.1 und 12.2 auf und sind mit Aussparungen 18 und 19 versehen. Ein weiterer sehr wesentlicher Vorteil der so ausgebildeten Winkelverbindungselemente ist der, daß bei einem Zusammenfügen von zwei Platten ein Schneiden auf Gehrung nicht mehr-erforderlich ist. Auf der Schenkelseite 11.1 sind etwa in der Mitte die nagelförmigen Erhebungen 13 und auf der Schenkelseite 12.1 ebenfalls etwa in der Mitte nagelförmige Erhebungen 14 befestigt. Sie haben eine Länge l₁₃ bzw. l₁₄ von etwa 0,3 ... 0,9 mal der Plattendicke D der Platte 1. Hierdurch wird erreicht, daß bei einem Einstecken in die Platte 1 auf einer Flachseite ein Herausragen der nagelförmigen Erhebungen 13 bzw. 14 verhindert wird. Die Dicke der nagelförmigen Erhebungen 13 bzw. 14 beträgt etwa 0,5-100 mm, vorzugsweise 4 mm. Ihr Querschnitt ist viereckig oder rund.

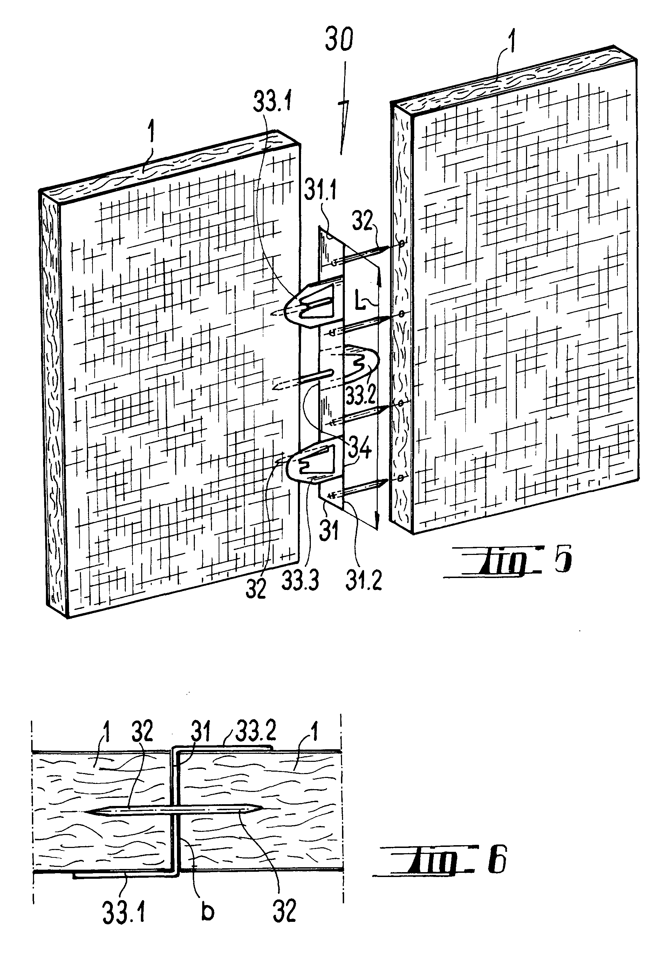

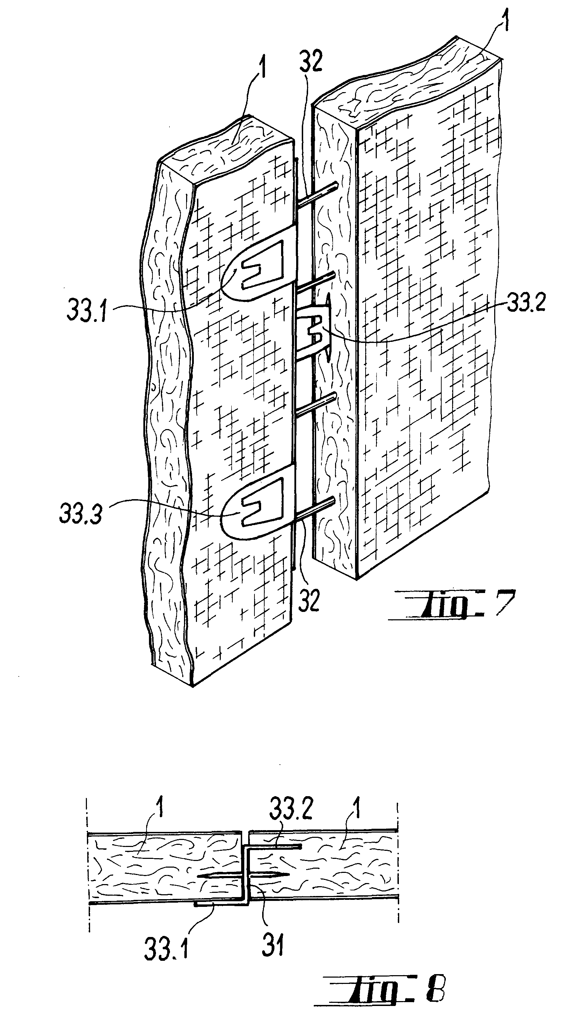

Das Winkelanschlußelement 20 gemäß Fig. 4 weist einen Steckschenkel 21 und einen Anschlußschenkel 22 auf, die in einem Winkel γ von etwa 90° zueinander angeordnet sind. Beide Schenkel 21 und 22 können entweder durch Biegen, Verschweißen oder dergleichen zusammengefügt werden. Der Steckschenkel 21 weist Steckschenkelseiten 21.1 und 21.2 auf. Auf den zum Anschlußschenkel 22 weisenden Steckschenkelseite 21.1 sind gleichmäßig beabstandet etwa in der Mitte Stiftelemente 23 angeordnet. Auch hier ist es von Vorteil, wenn die Stiftelemente 23 eine Länge 123 von 0.3, ... 0,9 mal Plattendicke D der Platte 1 aufweisen. Ihr Querschnitt entspricht dem-der oben bechriebenen nagelförmigen Erhebungen 13 bzw. 14. Gleiches gilt vorteilhafterweise für ihre Länge. Der Steckschenkel 21 hat dabei eine Breite B, die ≤ der Plattemdicke D ist. Nach einem Bereich, der etwa der Breite des Steckschenkels 21 entspricht, geht der Anschlußschenkel 22 in eine pyramidenstumpfförmige Form über. Er weist Durchbrechungen-24 auf. Diese sind,- wie Fig. 3 zeigt, rund und oval. Die runden Durchbrechungen 24, die am Ende des Anschlußschenkels eingebracht sind, sind für eine Nagelung geeignet.

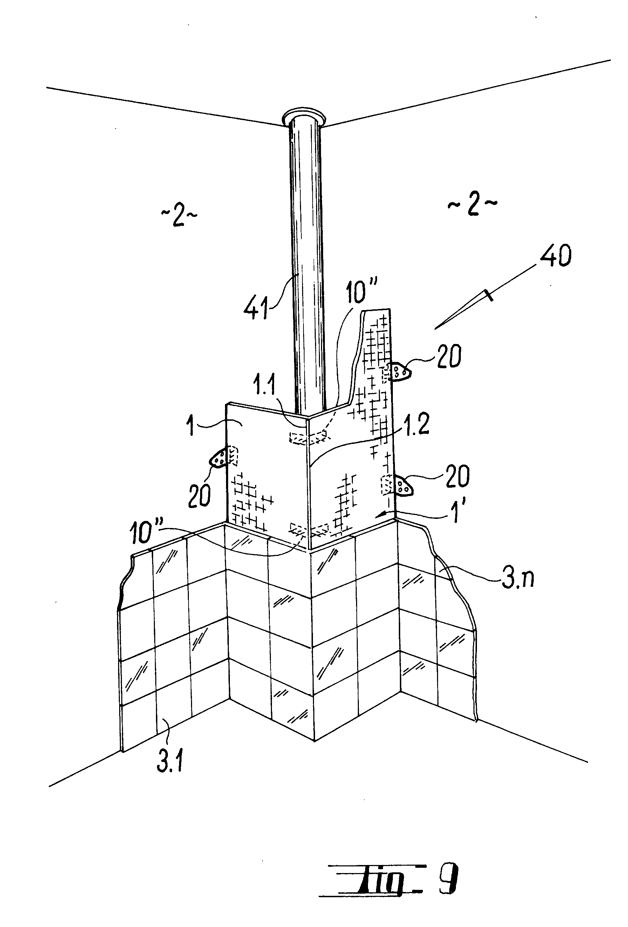

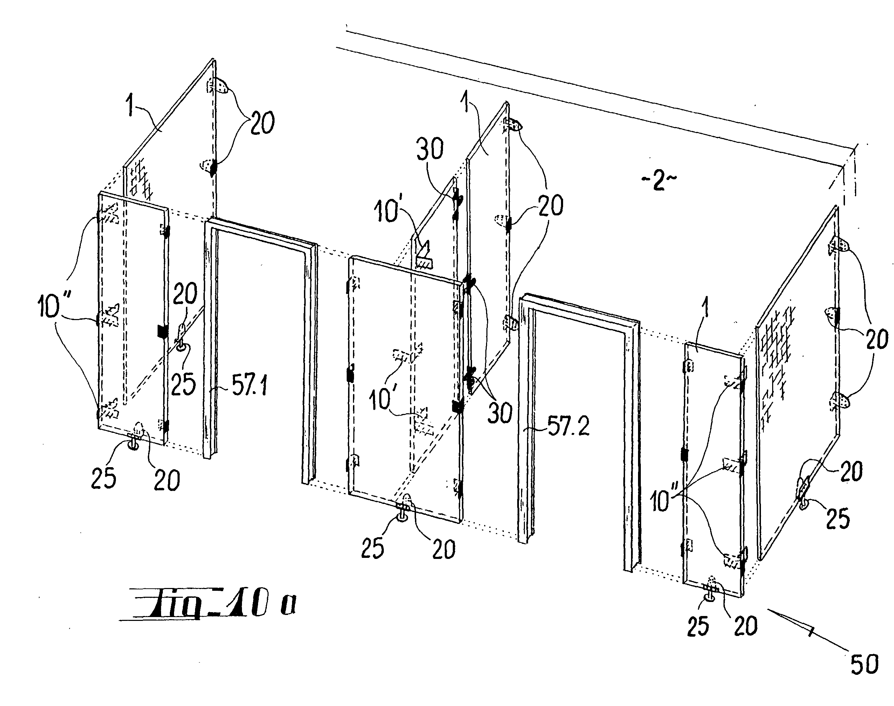

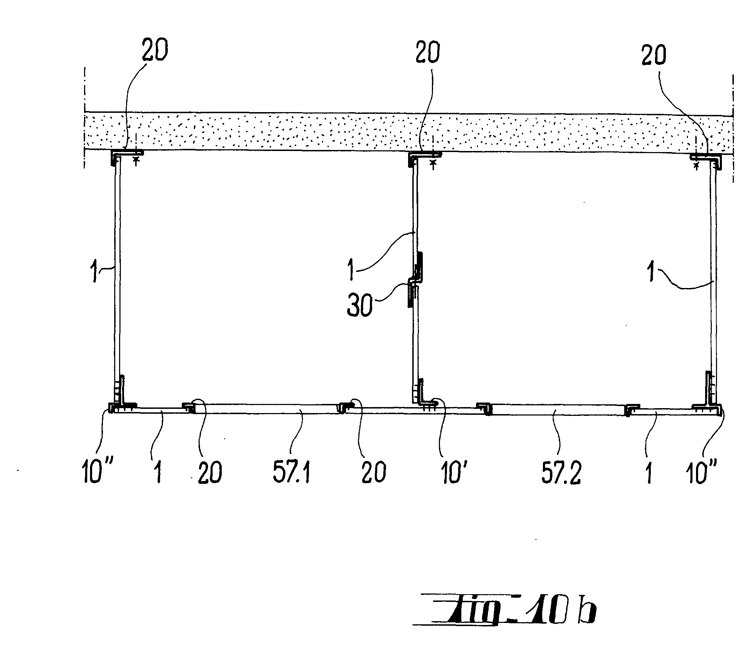

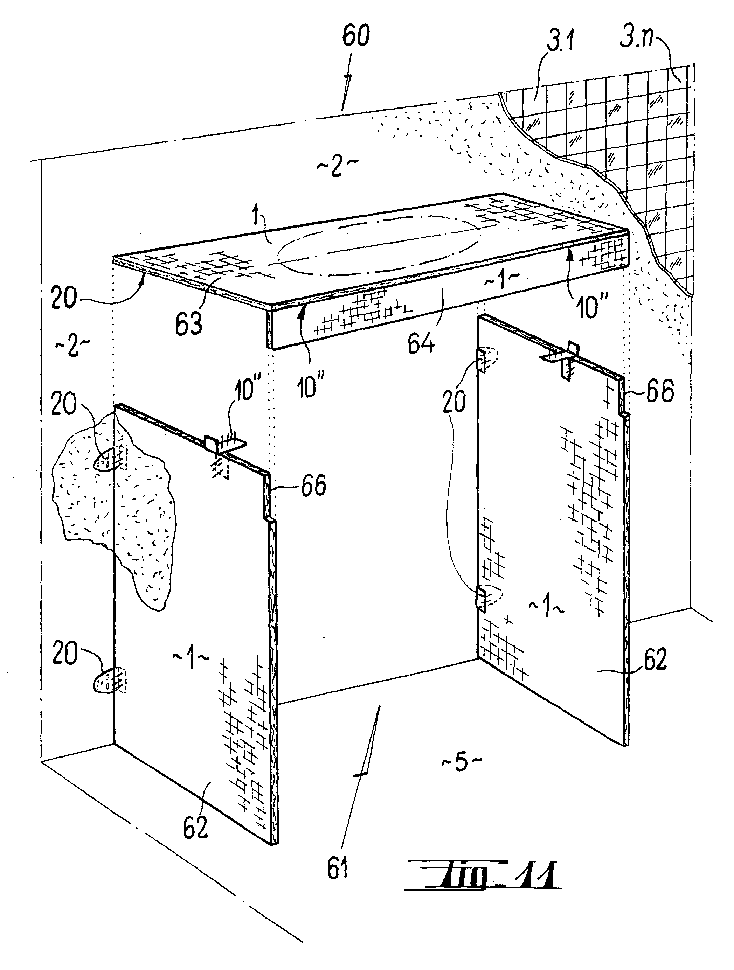

Ein Längenverbindungselement 30 besteht, wie insbesondere Fig. 5 zeigt, aus einem Verbindungsschenkel 31 mit Verbindungsschenkelseiten 31.1 und 31.2. An den Verbindungsschenkelseiten 31.1 und 31.2 sind etwa in der Mitte nagelförmige Stiftelemente 32 angebracht. Die Länge der Stiftelemente 32 kann den jeweiligen Erfordernissen entsprechend angepasst werden. Vorteilhafterweise entsprechen ihre Länge und -ihr Querschnitt den oben beschriebenen nagelförmigen Erhebungen. An der Außenseite des Verbindungsschenkels 31 sind in unterschiedlicher Richtung zeigend spitze Lanzenschenkel 33.1, 33.2 und 33.3 angeordnet. Die Lanzenschenkel 33.1, 33.2, und 33.3 verfügen über Sollbruchlinien 34. Das Längenverbindungselement hat eine Längslänge L von etwa 5 bis 500 mm, vorzugsweise 100 mm. Um zwei Teilplatten 1 zu einer Gesamtplatte 1 zusammenzufügen, wird das Längenverbindungselement in die sich gegenüberliegenden Schmalseiten der Platte 1, wie Fig. 5 und 6 zeigen, gesteckt. Ist die Platte etwa so breit, wie der Abstand der Lanzenschenkel 33.1 und 33.2 in Fig. 6 zeigt, werden beide Platten arretiert. Eine solche Verbindung-wird immer dann gewählt, wenn relativ dünne Platten miteinander zu verbinden sind. Hierdurch wird ein Auswölben der einzelnen Platten und damit ein Ausreißen der Stifterhebungselemente 32.1, ... aus den- Platten verhindert. Möglich ist es natürlich auch, über die Sollbruchlinien 34 die gezeigten drei Lanzenschenkel abzubrechen, so daß ein sehr glatter Verbindungsschenkel übrig bleibt. Das wird immer dann von Nutzen sein, wenn vor einem anschließenden Verfliesen sehr sparsam und kostendeckend ein Verbindungsmittel aufzutragen ist. Kommen hingegen dickere Platten 1 zum Einsatz, wie Fig. 7 und 8 zeigen, bohren sich die Lanzenschenkel 33.1 ... in die Platte ein. Je nach der Dicke der jeweiligen Platte 1 können sich dabei alle drei Lanzenschenkel oder, wie Fig. 7 und 8 zeigen, einen Lanzenschenkel in die Platten 1 einschieben. Hierdurch wird erreicht, daß die beiden Platten sehr-intensiv und fest miteinander verbunden sind.

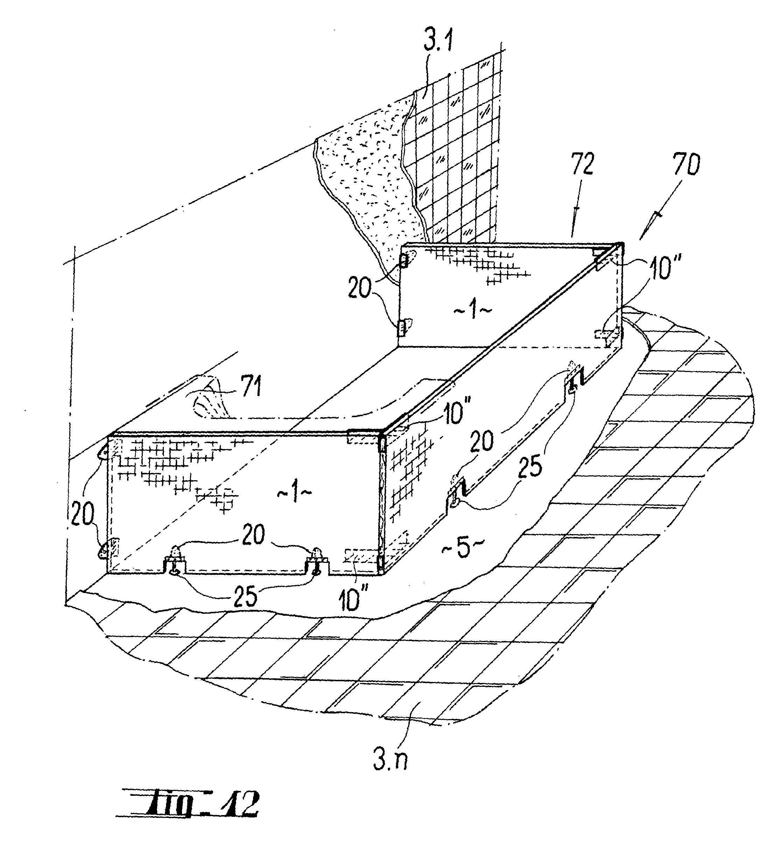

In Fig. 9 ist ein Rohrkasten 40 dargestellt. Er besteht im wesentlichen aus zwei Platten 1, die an ihren aufeinander zuweisenden Längsseiten 1.1, 1.2 unter einem rechten Winkel miteinander verbunden sind. Die Platten 1 bestehen aus einem Kunststoff-Hartschaum und sind auf ihrer Flachseite 1' und der dieser gegenüberliegenden Flachseite mit einem Armierungsgewebe, z.B. einer Glasfaserarmierung, und einer Spezialmörtelbeschichtung versehen. Das Glasfaserarmierungsgewebe trägt einerseits zu einer stabilen Verbindung der beiden Platten bei und ergibt andererseits einen gute haftfähigen Untergrund für einen auf dem Rohrkasten anzubringenden Verputz oder Kleber.

Die beiden Platten 1 werden durch zwei Winkelverbindungselemente 10", die beabstandet über die Länge angebracht sind, miteinander verbunden.

Nachdem die beiden Platten 1 in der beschriebenen Art und Weise zusammengesteckt worden sind, werden die Winkelanschlußelemente 20 in ihren Flachseiten angeordnet und an Wandflächen 2 befestigt.

Selbstverständlich ist es auch möglich, mit Hilfe der Winkelanschlußelemente 20 einen Rohrkasten 40 an den Wandflächen 2 zu befestigen, bei dem die Platten 1 rechtwinklig oder mit Hilfe eines Gehrungsschnittes verklebt worden sind.

Nachdem die Freikanten an den Längsseiten des Rohrkastens 40 an den Wändenflächen 2 mit Hilfe der Winkelanschlußelemente 20 angeschraubt worden sind, ergibt sich ein im Querschnitt etwa quadratischer Hohlraum, in welchem ein zu kaschierendes Wasserrohr 41 von einem Fußboden bis zur Decke verläuft. Vorteilhaft ist es dabei, daß die Abmessungen der Platten 1 den jeweiligen Gegebenheiten frei angepaßt werden können. Hierdurch ist es möglich, das der Rohrkasten ohne zusätzliche Vorfertigungskapazität herzustellen ist. Ein noch wesentlicherer Vorteil ist der, daß der Rohrkasten 40 von einem "Laien" zusammensetzbar und befestigbar ist. Nach dem Einbau des Rohrkastens 40 kann dieser entweder wie der übrige Raum mit Fliesen 3.1, ... 3.n oder mit einer Tapete oder ähnlichem versehen werden können. Hierdurch ergibt sich eine optisch einwandfreie Führung des Wasserrohrs 41. Beim Verlegen von Fliesen bzw. beim Kleben einer Tapete wird durch die vorhandenen Durchbrechungen 24 Mörtel bzw. Kleber zwischen die Wand 2 und die Fliesen bzw. Tapete gebracht. Dadurch wird ein festerer und intensiverer Halt mit Hilfe des Winkelanschlußelements 20 erreicht.

In Fig. 10a und 10b ist der Aufbau eines Trennwandsystems 50 mit Hilfe des Systems zur Halterung und Befestigung dargestellt. Es besteht aus einzelnen Platten 1 und Türzargenelementen 57.1 und 57.2. Mit Hilfe von etwa drei der bereits beschriebenen Winkelanschlußelemente 20 wird die äußerste linke Tafel an der Wand befestigt. Damit die Platte 1 nicht verkanten kann, können die Winkelanschlußelemente 20 zu beiden Seiten hin geführt werden. Mit Hilfe von Nägeln kann die Wand so locker befestigt werden. Um die so gestellte äußerste linke Wand aus der Platte 1 auch halten zu können, wird an der unteren Schmalseite das Winkelanschlußelement 20 installiert. Der Anschlußschenkel 22 wird dabei auf die Breite der Plattendicke D der Platte 1 verkürzt. Darunter wird ein Fußelement 25 entweder durch Anschweißen oder Verschrauben befestigt. Das Fußelement 25 selbst ist höhenverstellbar. Danach wird mit drei Winkelverbindungselementen 10" im rechten Winkel eine weitere Platte 1 mit der bereits an der Wand befestigten Platte 1 zusammengesteckt. An der gegenüberliegenden Schmalseite werden wiederum drei Winkelanschlußelemente 20 mit verkürztem Anschlußschenkel 22 eingesteckt. An diese kann einseitig das Türzargenelement befestigt werden, z.B. durch Schrauben oder Verschweißen. An der rechten Seite des Türzargenelements 57.1 wird wiederum eine durchgehende Platte 1 in der bereits beschriebenen Art und Weise angebracht. Um eine Mittelwand anbringen zu können, werden Winkelanschlußelemente 10 eingesetzt. Das zweite Türzargenelement 57.2 wird in der bereits beschriebenen Art und Weise wiederum befestigt ebenso die Platte 1 auf der rechten Seite in der bereits beschriebenen Art und Weise. Das Zusammenfügen der äußeren Platten 1 zu einer Winkelverbindung erfolgt in der eingangs beschriebenen Art und Weise, ebenso das Befestigen der äußeren Platte 1 mit Hilfe der Winkelanschlußelemente 20. Dadurch, daß das Winkelanschlußelement 20 darüber hinaus an der Unterseite einzelner Platten 1 mit einem Fußelement versehen worden ist, kann das ganze Trennwandsystem einjustiert werden und entsprechend befestigt werden. Nachdem die einzelnen Platten 1 mit Hilfe der Winkelverbindungselemente zusammengesteckt und diese mit den Türzargenelementen 57.1 und 57.2 unter Einsatz der Winkelanschlußelemente 20 an der Wandfläche 2 mit Hilfe von Nägeln oder dergleichen angesetzt worden sind, werden diese ebenso wie die gesamte Wandfläche 2 mit Fliesen belegt. Der beim Fliesen verwendete Mörtel dringt dabei wie bereits beschrieben in die Durchbrechungen 24 ein und sorgt für eine weitere Verhaftung und Befestigung der Winkelanschlußelemente 20.

Wie Fig.10a und 10b zeigen, wird zur Verlängerung und zur Zusammensetzung von Teilplatten zu einer größeren Platte das Längenverbindungselement 30 eingesetzt.

Anstelle der bisherigen Anfertigung spezieller Rahmen und Halterungen, die die Tafeln 1 halten, wird im vorliegenden Fall das Trennwandsystem 50 mit insgesamt zwei Elementen, nämlich dem Winkelverbindungselement und dem Winkelanschlußelement 20 und in abgewandelter Form mit einem Fußelement 25 verdeckt gesteckt, aufgebaut, befestigt und justiert. Als drittes Element wird das Längenverbindungselement 30 eingesetzt.

In Fig.11 wird mit Hilfe des Systems zur Halterung und Befestigung ein Waschtisch 60 aus Platten 1 aus Kunststoffhartschaum mit beidseitig versehender Glasfaserarmierung und Spezialmörtelbeschichtung aufgebaut. Aus den Platten 1 wird ein Waschbeckenunterbau 61 aus zwei Fußteilen 62 und einer Waschtischplatte 63 hergestellt. Die Fußteile 62 weisen an ihren oberen Enden Ausnehmungen 66 auf. In die Waschtischplatte 63 wird eine Waschbeckenöffnung gesägt. Mit Hilfe der bereits beschriebenen Winkelverbindungselemente 10" wird die Waschtischplatte 63 mit einer Abschlußplatte 64 zusammengesteckt. Bereits diese Konstellation kann mit Hilfe der bereits beschriebenen Winkelanschlußelemente 20 an einer Wand 2 befestigt werden. Um dem gesamten Waschtisch aber mehr Festigkeit zu verleihen, wird mit Hilfe weiterer Winkelverbindungselemente 10" die Waschtischplatte 63 mit den Fußteilen 62 zusammengesteckt. Außerdem werden die Fußteile 62 mit Hilfe weiterer Winkelanschlußelemente 20 an der Wand 2 befestigt. Durch das Anbringen der Waschtischplatte 63 und der Fußteile 62 mit Hilfe der Winkelanschlußelemente 20 an der Wand 2 sowie durch das Aufstützen der Fußteile 62 auf einem Boden 5 erhält der gesamte Waschtisch eine solide Standsicherheit. Anschließend können der Waschtisch und-die Wände mit Fliesen 3.1, ... 3.n verfliest werden, so daß ein einheitliches und gleichmäßiges Äußeres entsteht.

In Fig. 12 ist eine weitere Konfiguration mit Hilfe eines Systems zur Halterung und Befestigung aufgebaut. In Fig. 12 ist eine an eine verflieste Wand 2 sich anschließende Badewanne 71 dargestellt, die mit einer Badewannenverkleidung 70 versehen werden soll. Die Badewannenverkleidung 70 besteht aus mehreren Platten 1, bei der der Kern aus einem wasserfesten, beidseitig armierten Kunststoff-Hartschaum besteht. Hierzu haben sich als geeignet z.B. extrudierte Polystyron-Schaumplatten erwiesen, auf die unter Verwendung eines Spezialmörtels beidseitig ein Glasfilamentgewebe als Armierung aufgelegt ist. Geeignet sind auch andere Schaummaterialien, z.B. verdichteter Polyurethanschaum.

Die einzelnen Platten 1 werden mit Hilfe der bereits ausführlich beschriebenen Winkelverbindungselemente 10" zu einer Verkleidungsschürze 72 der Badewannenverkleidung 70 zusammengefügt. Dabei werden die Winkelverbindungselemente 10", wie Fig. 12 zeigt, vorzugsweise am oberen und unteren Ende zweier zusammenstoßender Platten 1 eingedrückt. An der Unterseite der Platten 1 sind als metallenen Streben Winkelanschlußelemente 20 mit verkürzten Anschlußschenkeln 22 eingedrückt. Der Anschlußschenkel 22 ist dabei soweit gekürzt, daß er nicht länger ist als die Plattendicke D der Platte 1.

An diese Winkelanschlußelemente 20 wird das bereits beschriebene Fußelement 25 angesetzt, das höhenverstellbar ist. Die jeweils höhenverstellbaren Fußelemente 25 stehen dabei direkt auf dem Fußboden 5 bzw. auf dem Unterbeton des Fußbodens auf. Mit Hilfe der höhenverstellbaren Füße kann die Verkleidungsschürze 72 direkt unter der Badewanne so justiert werden, daß ein gleichmäßiges und abdichtendes Anschließen gegeben ist. Danach werden die Tafeln 1 mit den bereits beschriebenen Winkelanschlußelementen 20 an der Wand befestigt. Hierzu wird der Steckschenkel 21 mit den Stiftelementen 23 in die nach innen zeigende Flachseite der Platten gesteckt und danach der Anschlußschenkel 22 mit Hilfe von Nägeln oder Schrauben vorbefestigt. Danach werden die Badewannenverkleidung 70 und die Wand 2 mit Fliesen 3.1, ... 3.n belegt. Das beim Verlegen der Fliesen 3.1, ... 3n verwendete Klebemittel, z.B. Fliesenmörtel sorgt darüber hinaus dafür, daß die Anschlußschenkel 22 durch die Durchbrechungen 24 fester an der Wand gehalten werden. Anschließend kann der Fußboden 5 mit entsprechenden Fußbodenfliesen ausgelegt werden. Durch den Einsatz des Systems zur Halterung und Befestigung wird das herkömmliche Anfertigen der Badewannenverkleidung 70 einschließlich ihrer Befestigung und Verstellbarkeit um etwa 30 % reduziert. Die einzelnen nagelförmigen Erhebungen 13, die Stiftelemente 23 und die Durchbrechungen 24 sorgen für einen festen Zusammenhalt der einzelnen Platten untereinander und für einen Halt an der Wand 2.

Die beschriebenen Konfigurationen zusammensteckbarer und-befestigbarer Platten 1 mit Hilfe des Halterungs- und Befestigungssystems sind auf die vorgenannten Ausführungsformennicht beschränkt.

Es können sämtliche Bauelemente aus organischen und/oder anorganischen Substanzen, wie Schaumstoff, besonders gehaltene Glasfasermatten und dergleichen z.B. zur Wärmeisolierunggroßer Rohrleitungen, mit Hilfe des Systems zur Halterung und Befestigung beliebig zusammengesteckt und befestigt werden.

Beim Zusammenstecken von Bauelementen ist das jeweilige Bauelement nicht nur auf eine plattenförmige Konfiguration begrenzt. Vielmehr können auch alle anderen gießbaren und formbaren Konfigurationen wie Bögen, Halbbögen, Teilbögen, geschwungene bzw. verschnörkelte Bauteile mit dem System zur Halterung und Befestigung zu bestimmten Bausystemen zusammengesteckt und danach an Wänden, Pfeilern oder sonstigen speziell eingelassenen oder vorhandenen Halterungselementen wie Streben, Türzargen oder dergleichen befestigt werden.

## Patentansprüche

1. System zur Halterung und Befestigung von Bauelementen aus organischen und/oder anorganischen Substanzen, insbesondere Platten (1) aus Kunststoff-Hartschaum, die wenigstens einseitig mit einem Glasfasergewebe und einer Spezialmörtelschicht versehen sind, mit folgenden Teilen:
- einem ersten Winkelverbindungselement (10), das aus zwei Befestigungsschenkeln (11, 12) besteht, die in einem ersten Winkel (α) von etwa 90° verbunden sind, wobei wenigstens eine Befestigungsschenkelseite (11.1, 11.2, 12.1, 12.2) beider Befestigungsschenkel (11, 12) mit nagelförmigen Erhebungen versehen ist,
- einem zweiten Winkelverbindungselement (10), das aus zwei Befestigungsschenkeln besteht, die in dem ersten Winkel (α) von 90° verbunden und wenigstens eine der Befestigungsschenkelseiten beider Schenkel mit nagelförmigen Erhebungen versehen ist, wobei einer der beiden Befestigungsschenkel über die Winkelverbindung hinaus mit einem dritten Befestigungsschenkel verlängert ist,
- einem dritten Winkelverbindungselement (10"), das aus zwei Befestigungsschenkeln (11, 12) besteht, bei dem beide Befestigungsschenkel (11, 12) in dem ersten Winkel (α) von 90° verbunden und wenigstens eine der Befestigungsschenkelseiten (11.1, 11.2, 12.1, 12.2) mit nagelförmigen Erhebungen (13, 14) versehen ist, und einer der beiden Befestigungsschenkel (11, 12) über eine Winkelverbindung (15) hinaus mit einem dritten Befestigungsschenkel (16) verlängert ist, wobei an dem dritten Befestigungsschenkel (16) ein Arretierungsschenkel (17) in einem zweiten Winkel (β) von etwa 90° angeordnet ist,
- einem Winkelanschlußelement (20), das aus einem Anschlußschenkel (22) besteht, der in eine pyramidenstumpfförmige Halteplatte übergeht und an dem in einem dritten Winkel (γ) von etwa 90° ein Steckschenkel (21) angeordnet ist, der eine Breite (B) aufweist, die etwa 03 bis 1,0 mal der Plattendicke (D) der Platte (1) ist, wobei auf einer der zum Anschlußschenkel (22) weisenden Steckschenkelseite (21.1) nagelförmige Stiftelemente (23) angeordnet sind und wobei in die Halteplatte Durchbrechungen (24) eingebracht sind,
- einem eine Längslänge von etwa 5 bis 500 mm, vorzugsweise 100 mm aufweisendes Längenverbindungselement (30), das aus einem Verbindungsschenkel (31) besteht, der eine Breite (b) aufweist, die etwa 0,3 bis 1,0 mal der Plattendicke (D) der Platte (1) ist, auf dessen beiden Verbindungswinkelseiten (31.1, 31.2) nagelförmige Stiftelemente und zu deren Außenseiten hin wenigstens ein spitzer Lanzenschenkel (33.1, 33.2, 33.3) angeordnet ist.

2. System nach Anspruch 1, dadurch gekennzeichnet, daß die Länge l16, l17) des dritten Befestigungsschenkels (16) des zweiten und des dritten Winkelverbindungselements (10', 10") und der Arretierungsschenkel (17) des dritten Winkelverbindungselements (10") etwa einer Plattendicke (D) der Platte (1) entspricht.

3. System nach Anspruch 1 oder-2, dadurch gekennzeichnet, daß die Befestigungsschenkel (11, 12) des ersten, zweiten und dritten Winkelverbindungselements (10, 10', 10") Aussparungen (18, 19) aufweisen.

4. System nach Anspruch 1, dadurch gekennzeichnet, daß am Winkelanschlußelement (20) ein Fußelement (25) angeordnet ist.

5. System nach Anspruch 4, dadurch gekennzeichnet, daß das Fußelement (25) höhenverstellbar ist.

6. System nach einem der Ansprüche 1 bis 3, dadurch gekennzeichnet, daß die Aussparungen (18, 19) der Befestigungsschenkel (11, 12) des ersten, zweiten und dritten Winkelverbindungselements (10, 10', 10") und die Durchbrechungen (21.1, ... 21.n) die Halteplatte des Winkelanschlußelements (20) rund, W-förmig oder oval ausgebildet sind.

7. System nach einem der Ansprüche 1 bis 6, dadurch gekennzeichnet, daß die Lanzenschenkel (33.1, 33.2, 33.3) mit einer Sollbruchlinie (34) versehen sind.

8. System nach einem der Ansprüche 1 bis 7, dadurch gekennzeichnet, daß die nagelförmigen Erhebungen (13, 14) und die nagelförmigen Stiftelemente (23; 32) mit Erhebungen oder im Querschnitt keilförmigen Ringelementen, die in gleichmäßigen Abständen über den-Schaft verteilt angeordnet sind, versehen sind.

9. System nach einem der Ansprüche 1 bis 8, dadurch gekennzeichnet, daß das erste, zweite und dritte Winkelverbindungselement (10, 10', 10"), das Winkelanschlußelement (20) und das Längenverbindungselement (30) aus Kunststoff, Metall oder Hartpapier hergestellt sind.

10. System nach Anspruch 9, dadurch gekennzeichnet, daß der Kunststoff ein Hartkunststoff, das Metall Messing oder Eisen ist.

## Claims

1. A system for mounting and fixing building elements consisting of organic and/or inorganic substances, more particularly panels (1) of rigid plastic foam, which are provided, at least on one side, with a glass fibre fabric and a special mortar coating, comprising the following parts:
- a first angle connecting element 10, which consists of two fixing limbs (11, 12), which are connected at a first angle (α) of about 90°, at least one fixing limb side (11.1, 11.2, 12.1. 12.2) of the two fixing limbs (11, 12) being provided with projections in the form of nails,
- a second angle connecting element (10) which consists of two fixing limbs which are connected at the first angle (α) of 90° and at least one of the fixing limb sides of the two limbs is provided with projections in the form of nails, one of the two fixing limbs being lengthened, beyond the angle connection, by a third fixing limb,
- a third angle connecting element (10"), which consists of two fixing limbs (11, 12) in which the two fixing limbs (11, 12) are connected at the first angle (α) of 90° and at least one of the fixing limb sides (11.1, 11.2, 12.1, 12.2) is provided with projections (13, 14) in the form of nails and one of the two fixing limbs (11, 12) is lengthened, beyond an angle connection (15), by a third fixing limb (16), a locking limb (17) being disposed at the third fixing limb (16) at a second angle (β) of about 90°,
- an angle junction element (20), which consists of a junction limb (22) which merges into a retaining plate in the form of a truncated pyramid and on which a plug-in limb (21) is disposed at a third angle (γ) of about 90°, of a width (B) equal to about 0.3 to 1.0 times the thickness (D) of the panel (1), pin elements (23) in the form of nails being disposed on a plug-in limb side (21.1) pointing towards the junction limb (22) and apertures (24) being formed in the retaining plate,
- a longitudinal connecting element (30) having a longitudinal length of about 5 to 500 mm, preferably 100 mm, and consisting of a connecting limb (31) having a width (b) equal to about 0.3 to 1.0 times the thickness (D) of the panel (1), and on the two connecting angle sides (31.1, 31.2) of which pin elements in the form of nails are disposed and, towards their outsides, at least pointed lance limb (33.1, 33.2, 33.3) is disposed.

2. A system according to claim 1, characterised in that the length (116, 117) of the third fixing limb (16) of the second and of the third angle connecting element (10', 10") and of the locking limbs (17) of the third angle connecting element (10") is equal to approximately one thickness (D) of the panel (1).

3. A system according to claim 1 or 2, characterised in that the fixing limbs (11, 12) of the first, second and third angle connecting elements (10, 10', 10") have recesses (18, 19).

4. A system according to claim 1, characterised in that a foot element (25) is disposed on the angle junction element (20).

5. A system according to claim 4, characterised in that the foot element (25) is vertically adjustable.

6. A system according to any one of claims 1 to 3, characterised in that the recesses (18, 19) of the fixing limbs (11, 12) of the first, second and third angle connecting elements (10, 10', 10") and the apertures (21.1 ... 21.n) in the retaining plate of the angle junction element (20) are round, W-shaped or oval.

7. A system according to any one of claims 1 to 6, characterised in that the lance limbs (33.1, 33.2, 33.3) are provided with an intentional breaking line (34) .

8. A system according to any one of claims 1 to 7, characterised in that the projections (13, 14) in the form of nails and the pin elements (23; 32) in the form of nails are provided with projections or ring elements of wedge-shaped cross-section, which are disposed at equal distances over the shank.

9. A system according to any one of claims 1 to 8, characterised in that the first, second and third angle connecting elements (10, 10', 10"), the angle junction element (20) and the longitudinal connecting element (30) are made from plastic, metal or hard paper.

10. A system according to claim 9, characterised in that the plastic is a hard plastic, and the metal is brass or iron.

## Revendications

1. Système de montage et de fixation d'éléments de construction en substances organiques et/ou inorganiques, en particulier de plaques (1) en matière plastique cellulaire dure, qui portent sur au moins l'un de leurs côtés un tissu de fibre de verre et une couche de mortier spécial, qui comprend les éléments suivants:
- un premier élément de connexion angulaire (10) qui se compose de deux branches de fixation (11, 12) qui sont connectés selon un premier angle (α) d'environ 90° et dans lequel au moins un côté (11.1, 11.2, 12.1, 12.2) de branche de fixation des deux branches de fixation (11, 12) comporte des surélévations en forme de clous,
- un deuxième élément de connexion angulaire (10') qui se compose de deux branches de fixation qui sont connectées selon le premier angle (α) de 90° et dans lequel au moins l'un des côtés de branche de fixation des deux branches comporte des surélévations en forme de clous, l'une des deux branches de fixation étant prolongée au-delà de la connexion angulaire par une troisième branche de fixation,
- un troisième élément de connexion angulaire (10") qui se compose de deux branches de fixation (11, 12), dans lequel les deux branches de fixation (11, 12) sont connectées selon le premier angle (α) de 90° et au moins l'un des cotés (11.1, 11.2, 12.1, 12.2) de branche de fixation comporte des surélévations en forme de clous (13, 14) et l'une des deux branches de fixation (11, 12) est prolongée au-delà de la connexion angulaire (15) par une troisième branche de fixation (16), une branche de blocage (17) étant agencée selon un deuxième angle (β) d'environ 90° sur la troisième branche de fixation (16),
- un élément d'assemblage angulaire (20) qui se compose d'une branche d'assemblage (22), qui est une plaque de maintien qui se poursuit en tronc de pyramide, et d'une branche d'enfoncement (21) d'une largeur (B) qui est égale à environ 0,3 à 1,0 fois l'épaisseur (D) de plaque de la plaque (1) et forme un troisième angle (γ) d'environ 90°par rapport à l'autre, des éléments de broches (23) en forme de clous étant agencés sur l'un des côtés (21.1) de branche d'enfoncement tourné vers la branche d'assemblage (22) et des orifices (24) étant ménagés dans la plaque de maintien,
- un élément de connexion longitudinale (30) d'une longueur d'environ 5 à 500 mm, de préférence 100 mm, qui se compose d'une branche de connexion (31) d'une largeur (b) égale à environ 0,3 à 1,0 fois l'épaisseur (D) de plaque de la plaque (1), qui comporte sur ses deux côtés angulaires de connexion (31.1, 31.2) des éléments de broches en forme de clous et sur ses deux côtés extérieurs au moins une branche lancéolée effilée (33.1, 33.2, 33.3).

2. Système selon la revendication 1, caractérisé en ce que la longueur (16, 17) de la troisième branche de fixation (16) du deuxième et du troisième éléments de connexion angulaire (10', 10") et de la branche de blocage (17) du troisième élément de connexion angulaire (10") correspond à peu près à une épaisseur (D) de plaque de la plaque (1).

3. Système selon la revendication 1 ou 2, caractérisé en ce que les branches de fixation (11, 12) des premier, deuxième et troisième éléments de connexion angulaire (10, 10', 10") comportent des évidements (18, 19).

4. Système selon la revendication 1, caractérisé en ce qu'un élément de pied (25) est agencé sur l'élément d'assemblage angulaire (20).

5. Système selon la revendication 4, caractérisé en ce que l'élément de pied (25) est réglable en hauteur.

6. Système selon l'une quelconque des revendications 1 à 3, caractérisé en ce que la forme des évidements (18, 19) des branches de fixation (11, 12) des premier, deuxième et troisième éléments de connexion angulaire (10, 10', 10") et des orifices (21.1, ... 21.n) de la plaque de maintien de l'élément d'assemblage angulaire (20) est ronde, ou en W ou ovale.

7. Système selon l'une quelconque des revendications précédentes, caractérisé en ce que les branches lancéolées (33.1, 33.2, 33.3) comportent une ligne (34) destinée à la rupture.

8. Système selon l'une quelconque des revendications précédentes, caractérisé en ce que les surélévations en forme de clous (13, 14) et les éléments de broches en forme de clous (23; 32) comportent des surélévations ou des éléments annulaires à section transversale en forme de cale qui sont agencés de façon répartie à distances égales sur la tige.

9. Système selon l'une quelconque des revendications précédentes, caractérisé en ce qu'en ce que les premier, deuxième et troisième éléments de connexion angulaire (10, 10', 10"), l'élément d'assemblage angulaire (20) et l'élément de connexion longitudinale (30) sont en matière plastique, en métal, ou en carton fort.

10. Système selon la revendication 9, caractérisé en ce que la matière plastique est une matière plastique dure, le métal est du laiton ou un métal ferreux.
